(19) Europäisches Patentamt
European Patent Office
Office européen des brevets

(11) **EP 2 868 689 A1**

(12) **EUROPEAN PATENT APPLICATION**
published in accordance with Art. 153(4) EPC

(43) Date of publication:
06.05.2015 Bulletin 2015/19

(51) Int Cl.:
*C08J 5/22* (2006.01)        *C08L 33/12* (2006.01)
*C08L 33/20* (2006.01)

(21) Application number: 12879939.2

(22) Date of filing: 29.06.2012

(86) International application number:
**PCT/CN2012/077845**

(87) International publication number:
**WO 2014/000247 (03.01.2014 Gazette 2014/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
• **Ocean's King Lighting Science & Technology Co., Ltd**
**Shenzhen, Guangdong 518000 (CN)**
• **Shenzhen Ocean's King Lighting Engineering Co., Ltd.**
**Shenzhen, Guangdong 518000 (CN)**

(72) Inventors:
• **ZHOU, Mingjie**
**Shenzhen**
**Guangdong 518000 (CN)**
• **LIU, Daxi**
**Shenzhen**
**Guangdong 518000 (CN)**
• **WANG, Yaobing**
**Shenzhen**
**Guangdong 518000 (CN)**

(74) Representative: **Johnson, Richard Alan et al**
**Mewburn Ellis LLP**
**33 Gutter Lane**
**London EC2V 8AS (GB)**

(54) **METHOD FOR PREPARING POLYACRYLONITRILE-METHYL METHACRYLATE GEL ELECTROLYTE FILM, CORRESPONDING ELECTROLYTE AND PREPARATION METHOD THEREOF**

(57) Provided is a method for preparing polyacrylonitrile-methyl methacrylate gel electrolyte film. The method comprises the following steps: dissolving polyacrylonitrile-methyl methacrylate in an organic solvent with the mass 1 to 3 times as high as that of polyacrylonitrile-methyl methacrylate, adding MCM-48 mesoporous molecular sieves with the mass 0.05 to 0.3 times as high as that of polyacrylonitrile-methyl methacrylate, heating the mixture to 30-50 °C, stirring them uniformly, and obtaining a slurry containing MCM-48 mesoporous molecular sieve; coating the slurry onto the substrate, vacuum drying, and obtaining a mesoporous molecular sieve MCM-48 modified polyacrylonitrile-methyl methacrylate gel electrolyte film. In addition, the corresponding electrolyte and its preparation method are also provided. The polyacrylonitrile-methyl methacrylate gel electrolyte modified by mesoporous molecular sieve MCM-48 has high electrical conductivity and good security. The preparation method has simple technical process and is environment-friendly.

**Description**

FIELD OF THE INVENTION

The present invention relates to the field of electrochemistry, particularly to method for preparing polyacrylonitrile-methyl methacrylate gel electrolyte film, corresponding electrolyte and preparation method thereof.

BACKGROUND OF THE INVENTION

With the development of new energy resources and growing demand for large-capacity and high-power chemical power supply of portable electronics and electric vehicle, it has become more important to develop a new battery material having high discharge rates. However, security is always a problem restricting the application of large-capacity and high-power lithium-ion battery. Major potential safety hazard of battery are electrolyte leakage, oxidation and decomposition of electrolyte, and combustion or explosions caused by thermal runaway.

Advantage of conventional liquid electrolyte is high conductivity. However, it contains flammable and volatile organic solvents, releasing combustible gas when charging and discharging. Specially, under unusual operating conditions (such as charging/discharge at high rates, overcharge and over discharge, etc.), large amounts of heat will accelerate production of gas, leading to increased pressure within the battery, gas leakage, even fire and explosion, so there is a serious security risk. Lithium-ion polymer batteries have attracted the attention of researchers due to its advantages of safe, no electrolyte leakage and low current leakage. Further, the research focus on gel solid polymer electrolytes, since the application of solid polymer electrolyte is restricted due to its low conductivity ($10^{-5}$-$10^{-4}$ s/cm) at room temperature.

SUMMARY OF THE INVENTION

In view of this, the present invention aims to provide a method for preparing polyacrylonitrile-methyl methacrylate gel electrolyte film, corresponding electrolyte and preparation method thereof. After being modified by MCM-48 mesoporous molecular sieve, the polyacrylonitrile-methyl methacrylate gel electrolyte of the present invention has higher electrical conductivity and good security. Further, it can be used for lithium-ion batteries. Preparation method of the present invention has simple process and is environment-friendly.

In a first aspect, the present invention provides a method for preparing polyacrylonitrile-methyl methacrylate gel electrolyte film, comprising:

(1) dissolving polyacrylonitrile-methyl methacrylate in organic solvent in an amount ranging from 1 to 3 times the weight of polyacrylonitrile-methyl methacrylate, followed by adding MCM-48 mesoporous molecular sieves; elevating temperature to 30°C-50°C while stirring thoroughly, then obtaining a slurry containing MCM-48 mesoporous molecular sieve; wherein mass ratio of MCM-48 mesoporous molecular sieve to polyacrylonitrile-methyl methacrylate is in a range of 0.05-0.3:1;

(2) applying the slurry to a substrate, followed by vacuum drying at 60°C-100°C for a period of 24h-48h; then obtaining a MCM-48 mesoporous molecular sieve modified polyacrylonitrile-methyl methacrylate gel electrolyte film.

The step (1) is a process of obtaining a slurry containing MCM-48 mesoporous molecular sieve by dissolving polyacrylonitrile-methyl methacrylate (P(AN-MMA)) in organic solvent.

Preferably, a mass-average molecular mass of polyacrylonitrile-methyl methacrylate is in a range of 100,000-500,000.

Preferably, organic solvent in step (1) is N-methylpyrrolidone, N,N-dimethylformamide, acetonitrile or ethanol.

Preferably, MCM-48 mesoporous molecular sieve is prepared by the following steps: dissolving cetyl trimethyl ammonium bromide in deionized water, followed by adding sodium hydroxide; elevating temperature to 20°C-50°C, then stirring thoroughly at a constant temperature to dissolve sodium hydroxide; adding 1.0 g of tetraethyl orthosilicate while stirring for a period of 4-5h, then obtaining liquid reactant; transferring the liquid reactant to a polytetrafluoroethylene-lined reactor, then standing and crystallizing in a drying oven at 100°C; filtrating and washing with water, then drying at 70°C-90°C for a period of 12-48h to obtain MCM-48 precursor; placing the MCM-48 precursor in a muffle furnace, followed by roasting at 500°C-600°C for a period of 4-10h to remove template, then obtaining MCM-48 mesoporous molecular sieve; wherein mass ratio of deionized water to sodium hydroxide to tetraethyl orthosilicate is in a range of 60-80:0.3-0.6:1, and mass ratio of cetyl trimethyl ammonium bromide to deionized water in a range of 0.8%-1.2%.

Preferably, pore size of MCM-48 mesoporous molecular sieve is in a range of 2-5nm.

Introduction of MCM-48 mesoporous molecular sieve renders the obtained polyacrylonitrile-methyl methacrylate gel electrolyte film with good porous structure, where there are not only a large number of pores on the surface, but many interconnected pores beneath the surface. Such porous structure will improve the conductivity of the electrolyte.

The step (2) is a process of transferring the obtained slurry and preparing MCM-48 mesoporous molecular sieve modified polyacrylonitrile-methyl methacrylate gel electrolyte film.

Specifically, the slurry is applied to a substrate, followed by vacuum drying at 60°C-100°C for a period of 24h-48h; then a dried MCM-48 mesoporous molecular sieve modified polyacrylonitrile-methyl methacrylate gel electrolyte film is obtained. Presence of a large number of pores in film is beneficial to conductivity of electrolyte.

Preferably, a thickness of polyacrylonitrile-methyl methacrylate gel electrolyte film is in a range of 30μm-50μm.

Preferably, the substrate is glass plate or polytetrafluoroethylene plate.

In a second aspect, the present invention provides a method for preparing polyacrylonitrile-methyl methacrylate gel electrolyte, comprising:

(1) dissolving polyacrylonitrile-methyl methacrylate in organic solvent in an amount ranging from 1 to 3 times the weight of polyacrylonitrile-methyl methacrylate, followed by adding MCM-48 mesoporous molecular sieves; elevating temperature to 30°C-50°C while stirring thoroughly, then obtaining a slurry containing MCM-48 mesoporous molecular sieve; wherein mass ratio of MCM-48 mesoporous molecular sieve to polyacrylonitrile-methyl methacrylate is in a range of 0.05-0.3:1;

(2) applying the slurry to a substrate, followed by vacuum drying at 60°C-100°C for a period of 24h-48h; then obtaining a MCM-48 mesoporous molecular sieve modified polyacrylonitrile-methyl methacrylate gel electrolyte film;

(3) in a glove box filled with inert gas, immersing the polyacrylonitrile-methyl methacrylate gel electrolyte film in electrolyte for a period of 5min-60min, then obtaining a MCM-48 mesoporous molecular sieve modified polyacrylonitrile-methyl methacrylate gel electrolyte.

The step (1) is a process of obtaining a slurry containing MCM-48 mesoporous molecular sieve by dissolving polyacrylonitrile-methyl methacrylate (P(AN-MMA)) in organic solvent.

Preferably, a mass-average molecular mass of polyacrylonitrile-methyl methacrylate is in a range of 100,000-500,000.

Preferably, organic solvent in step (1) is N-methylpyrrolidone, N,N-dimethylformamide, acetonitrile or ethanol.

Preferably, MCM-48 mesoporous molecular sieve is prepared by the following steps: dissolving cetyl trimethyl ammonium bromide in deionized water, followed by adding sodium hydroxide; elevating temperature to 20°C-50°C, then stirring thoroughly at a constant temperature to dissolve sodium hydroxide; adding 1.0 g of tetraethyl orthosilicate while stirring for a period of 4-5h, then obtaining liquid reactant; transferring the liquid reactant to a polytetrafluoroethylene-lined reactor, then standing and crystallizing in a drying oven at 100°C; filtrating and washing with water, then drying at 70°C-90°C for a period of 12-48h to obtain MCM48 precursor; placing the MCM-48 precursor in a muffle furnace, followed by roasting at 500°C-600°C for a period of 4-10h to remove template, then obtaining MCM-48 mesoporous molecular sieve; wherein mass ratio of deionized water to sodium hydroxide to tetraethyl orthosilicate is in a range of 60-80:0.3-0.6:1, and mass ratio of cetyl trimethyl ammonium bromide to deionized water in a range of 0.8%-1.2%.

Preferably, pore size of MCM-48 mesoporous molecular sieve is in a range of 2-5nm.

Introduction of MCM-48 mesoporous molecular sieve renders the obtained polyacrylonitrile-methyl methacrylate gel electrolyte film with good porous structure, where there are not only a large number of pores on the surface, but many interconnected pores beneath the surface. Such porous structure will improve the conductivity of the electrolyte.

The step (2) is a process of transferring the obtained slurry and preparing MCM-48 mesoporous molecular sieve modified polyacrylonitrile-methyl methacrylate gel electrolyte film.

Specifically, the slurry is applied to a substrate, followed by vacuum drying at 60°C-100°C for a period of 24h-48h; then a dried MCM-48 mesoporous molecular sieve modified polyacrylonitrile-methyl methacrylate gel electrolyte film is obtained. Presence of a large number of pores in film is beneficial to conductivity of electrolyte.

Preferably, a thickness of polyacrylonitrile-methyl methacrylate gel film is in a range of 30μm-50μm.

Preferably, the substrate is glass plate or polytetrafluoroethylene plate.

The step (3) is a process of preparing polyacrylonitrile-methyl methacrylate gel electrolyte by immersing the obtained polyacrylonitrile-methyl methacrylate gel electrolyte film in electrolyte.

Preferably, the electrolyte consists of $LiPF_6$, EC and DMC.

Preferably, mass ratio of EC to DMC is in a range of 1:3-2:1.

Preferably, molar concentration of $LiPF_6$ is in a range of 0.5-1.5mol/L.

Preferably, electrolyte is contained in a glove box filled with inert gas.

Electrolyte is contained in a glove box filled with inert gas.

Preferably, inert gas is nitrogen gas or argon gas.

In a third aspect, the present invention provides a polyacrylonitrile-methyl methacrylate gel electrolyte prepared by methods as set forth above.

The present invention provides method for preparing polyacrylonitrile-methyl methacrylate gel electrolyte film, corresponding electrolyte and preparation method thereof. The present invention has the following advantages:

(1) After being modified by MCM-48 mesoporous molecular sieve, the polyacrylonitrile-methyl methacrylate gel electrolyte of the present invention has higher electrical conductivity, good security, better power density, long lifetime and larger capacity;

(2) The method for preparing polyacrylonitrile-methyl methacrylate gel electrolyte of the present invention has simple process and is low-cost and environment-friendly.

(3) The polyacrylonitrile-methyl methacrylate gel electrolyte of the present invention has can be used for lithium-ion batteries.

## DETAILED DESCRIPTION OF ILLUSTRATED EMBODIMENTS

The invention will now be described in detail on the basis of preferred embodiments. It is to be understood that various changes may be made without departing from the spirit and scope of the inventions.

Example 1

A method for preparing polyacrylonitrile-methyl methacrylate gel electrolyte comprises the following steps.

(1) 10g of polyacrylonitrile-methyl methacrylate having a mass-average molecular mass of 300,000 were dissolved in 20g of N-methylpyrrolidone (NMP), followed by adding 1.0g of MCM-48 mesoporous molecular sieve. The mixture was thoroughly stirred, while the temperature was elevated to 30°C. Slurry containing MCM-48 mesoporous molecular sieve was obtained.

In this embodiment, MCM-48 mesoporous molecular sieve was prepared by the following steps: dissolving 0.6g of CTAB (cetyl trimethyl ammonium bromide) in 65mL of deionized water, followed by adding 0.47g of sodium hydroxide; elevating temperature to 20°C, then stirring thoroughly at a constant temperature to dissolve sodium hydroxide; adding 1.0g of tetraethyl orthosilicate while stirring for 4h, then obtaining liquid reactant; transferring the liquid reactant to a polytetrafluoroethylene-lined reactor, then standing and crystallizing in a drying oven at 100°C; filtrating and washing with water, then drying at 70°C for 48h to obtain MCM-48 precursor; placing the MCM-48 precursor in a muffle furnace, and elevating temperature at a speed of 5°C/min, then roasting the MCM-48 precursor at 500°C for 10h to remove template, then obtaining MCM-48 mesoporous molecular sieve.

(2) Slurry was applied to a glass plate, followed by vacuum drying at 60°C for 48h, then a MCM-48 mesoporous molecular sieve modified polyacrylonitrile-methyl methacrylate gel electrolyte film was obtained.

Specifically, in this embodiment, thickness of the polyacrylonitrile-methyl methacrylate gel electrolyte film was 45$\mu$m.

(3) in a glove box filled with argon gas, the MCM-48 mesoporous molecular sieve modified polyacrylonitrile-methyl methacrylate gel electrolyte film was immersed in electrolyte for 5min, then a MCM-48 mesoporous molecular sieve modified polyacrylonitrile-methyl methacrylate gel electrolyte was obtained.

Specifically, in this embodiment, electrolyte consists of LiPF$_6$, EC and DMC; mass ratio of EC to DMC was 1:1, and molar concentration of the LiPF$_6$ was 1mol/L. Electrolyte was contained in a glove box filled with argon gas.

Conductivity of the MCM-48 mesoporous molecular sieve modified polyacrylonitrile-methyl methacrylate gel electrolyte of the present invention was 5.5ms/cm.

Measurement of conductivity: Electrolyte was provided between two stainless electrodes to form a polymer electrolyte electrode system. Alternating current resistance was measured and a graphical representation of the complex impedance plane was produced. The intersection of the curve and the horizontal axis in high frequency region is bulk resistance. The bulk resistance ($R_b$) and ionic conductivity ($\sigma$) are related by

$$\sigma = d/(S * R_b)$$

where d is thickness of polymer electrolyte film, and S is contact area between polymer electrolyte film and electrodes. Thus ionic conductivity can be calculated.

The prepared polyacrylonitrile-methyl methacrylate gel electrolyte was assembled into lithium-ion battery. 9.0g of LiMn$_2$O$_4$, 0.45 g of acetylene black, 0.45 g of PVDF and 20 g of NMP were mixed and stirred thoroughly to form slurry. The slurry was applied to a aluminum foil which was cleaned with ethanol in advance, then drying to constant weight at 80°C under a vacuum of 0.01 MPa, followed by rolling at a pressure of 10-15 MPa to produce LiMn$_2$O$_4$ electrode which was then cut into anode wafers. Lithium wafer was used as cathode. The prepared polyacrylonitrile-methyl methacrylate gel electrolyte was placed between electrodes as separator, and then sealed on a punching machine to prepare bottom battery. In a pressure range of 2.5-4.2V, the lithium-ion battery assembled according to this embodiment was tested at 0.1C on a charge-discharge tester. The third discharge specific capacity was 105 mAh/g, and discharge efficiency was 96%.

To further illustrate advantages of the present invention, a comparative embodiment is provided below.

10g of polyacrylonitrile-methyl methacrylate having a mass-average molecular mass of 300,000 were dissolved in 20g of N-methylpyrrolidone (NMP). The mixture was thoroughly stirred, while the temperature was elevated to 30°C. Slurry was obtained. The slurry was applied to a clean glass plate, followed by vacuum drying at 60°C under a vacuum of 0.01 MPa, and then a polyacrylonitrile-methyl methacrylate gel film having a thickness of 45$\mu$m was obtained. The dried polyacrylonitrile-methyl methacrylate gel film was placed in a glove box filled with argon gas, then immersed in 1mol/L of LiPF$_6$/EC+DMC (mass ratio 1:1) electrolyte for 5 min. polyacrylonitrile-methyl methacrylate gel electrolyte was obtained.

Test result shows that, conductivity of the polyacrylonitrile-methyl methacrylate gel electrolyte according to the comparative embodiment is only 1.3 ms/cm. Thus it can be seen that modification by MCM-48 mesoporous molecular sieve renders gel electrolyte with higher conductivity.

Example 2

A method for preparing polyacrylonitrile-methyl methacrylate gel electrolyte comprises the following steps.

(1) 10g of polyacrylonitrile-methyl methacrylate having a mass-average molecular mass of 100,000 were dissolved in 10 g of N,N-dimethylformamide, followed by adding 0.5g of MCM-48 mesoporous molecular sieve. The mixture was thoroughly stirred, while the temperature was elevated to 40°C. Slurry containing MCM-48 mesoporous molecular sieve was obtained.

In this embodiment, MCM-48 mesoporous molecular sieve was prepared by the following steps: dissolving 0.48 g of CTAB (cetyl trimethyl ammonium bromide) in 60mL of deionized water, followed by adding 0.3 g of sodium hydroxide; elevating temperature to 30°C, then stirring thoroughly at a constant temperature to dissolve sodium hydroxide; adding 1.0g of tetraethyl orthosilicate while stirring for 4h, then obtaining liquid reactant; transferring the liquid reactant to a polytetrafluoroethylene-lined reactor, then standing and crystallizing in a drying oven at 100°C; filtrating and washing with water, then drying at 80°C for 36h to obtain MCM-48 precursor; placing the MCM-48 precursor in a muffle furnace, and elevating temperature at a speed of 5°C/min, then roasting the MCM-48 precursor at 500°C for 8h to remove template, then obtaining MCM-48 mesoporous molecular sieve.

(2) Slurry was applied to a glass plate, followed by vacuum drying at 80°C for 36h, then a MCM-48 mesoporous molecular sieve modified polyacrylonitrile-methyl methacrylate gel electrolyte film was obtained.

Specifically, in this embodiment, thickness of the polyacrylonitrile-methyl methacrylate gel electrolyte film was 35$\mu$m.

(3) in a glove box filled with argon gas, the MCM-48 mesoporous molecular sieve modified polyacrylonitrile-methyl methacrylate gel film was immersed in electrolyte for 20 min, then a MCM-48 mesoporous molecular sieve modified polyacrylonitrile-methyl methacrylate gel electrolyte was obtained.

Specifically, in this embodiment, electrolyte consists of LiPF$_6$, EC and DMC; mass ratio of EC to DMC was 1:3, and molar concentration of the LiPF$_6$ was 0.5 mol/L. Electrolyte was contained in a glove box filled with argon gas.

Conductivity of the MCM-48 mesoporous molecular sieve modified polyacrylonitrile-methyl methacrylate gel electrolyte of the present invention was 4.2ms/cm.

The prepared polyacrylonitrile-methyl methacrylate gel electrolyte was use to assemble into lithium-ion battery (in a corresponding manner as described in Example 1). In a pressure range of 2.5-4.2V, the lithium-ion battery assembled according to this embodiment was tested at 0.1C on a charge-discharge tester. The third discharge specific capacity was 103 mAh/g, and discharge efficiency was 95%.

Example 3

A method for preparing polyacrylonitrile-methyl methacrylate gel electrolyte comprises the following steps.

(1) 10g of polyacrylonitrile-methyl methacrylate having a mass-average molecular mass of 500,000 were dissolved in 30 g of acetonitrile, followed by adding 2.0g of MCM-48 mesoporous molecular sieve. The mixture was thoroughly stirred, while the temperature was elevated to 45°C. Slurry containing MCM-48 mesoporous molecular sieve was obtained.

In this embodiment, MCM-48 mesoporous molecular sieve was prepared by the following steps: dissolving 0.96 g of CTAB (cetyl trimethyl ammonium bromide) in 80mL of deionized water, followed by adding 0.60 g of sodium hydroxide; elevating temperature to 40°C, then stirring thoroughly at a constant temperature to dissolve sodium hydroxide; adding 1.0g of tetraethyl orthosilicate while stirring for 5h, then obtaining liquid reactant; transferring the liquid reactant to a polytetrafluoroethylene-lined reactor, then standing and crystallizing in a drying oven at 100°C; filtrating and washing with water, then drying at 90°C for 24h to obtain MCM-48 precursor; placing the MCM-48 precursor in a muffle furnace, and elevating temperature at a speed of 5°C/min, then roasting the MCM-48 precursor at 600°C for 6h to remove template, then obtaining MCM-48 mesoporous molecular sieve.

(2) Slurry was applied to a glass plate, followed by vacuum drying at 90°C for 30h, then a MCM-48 mesoporous molecular sieve modified polyacrylonitrile-methyl methacrylate gel film was obtained.

Specifically, in this embodiment, thickness of the polyacrylonitrile-methyl methacrylate gel film was 50$\mu$m.

(3) in a glove box filled with nitrogen gas, the MCM-48 mesoporous molecular sieve modified polyacrylonitrile-methyl methacrylate gel film was immersed in electrolyte for 40 min, then a MCM-48 mesoporous molecular sieve modified polyacrylonitrile-methyl methacrylate gel electrolyte was obtained.

Specifically, in this embodiment, electrolyte consists of LiPF$_6$, EC and DMC; mass ratio of EC to DMC was 2:1, and molar concentration of the LiPF$_6$ was 1.5mol/L. Electrolyte was contained in a glove box filled with nitrogen gas.

Conductivity of the MCM-48 mesoporous molecular sieve modified polyacrylonitrile-methyl methacrylate gel electrolyte of the present invention was 4.7ms/cm.

The prepared polyacrylonitrile-methyl methacrylate gel electrolyte was use to assemble into lithium-ion battery (in a corresponding manner as described in Example 1). In a pressure range of 2.5-4.2V, the lithium-ion battery assembled according to this embodiment was tested at 0.1C on a charge-discharge tester. The third discharge specific capacity was 100 mAh/g, and discharge efficiency was 93%.

Example 4

A method for preparing polyacrylonitrile-methyl methacrylate gel electrolyte comprises the following steps.

(1) 10g of polyacrylonitrile-methyl methacrylate having a mass-average molecular mass of 300,000 were dissolved in 30g of ethanol, followed by adding 3.0g of MCM-48 mesoporous molecular sieve. The mixture was thoroughly stirred, while the temperature was elevated to 50°C. Slurry containing MCM-48 mesoporous molecular sieve was obtained.

In this embodiment, MCM-48 mesoporous molecular sieve was prepared by the following steps: dissolving 0.85 g of CTAB (cetyl trimethyl ammonium bromide) in 80g of deionized water, followed by adding 0.5 g of sodium hydroxide; elevating temperature to 50°C, then stirring thoroughly at a constant temperature to dissolve sodium hydroxide; adding 1.0g of tetraethyl orthosilicate while stirring for 5h, then obtaining liquid reactant; transferring the liquid reactant to a polytetrafluoroethylene-lined reactor, then standing and crystallizing in a drying oven at 100°C; filtrating and washing with water, then drying at 90°C for 12h to obtain MCM-48 precursor; placing the MCM-48 precursor in a muffle furnace, and elevating temperature at a speed of 5°C/min, then roasting the MCM-48 precursor at 600°C for 4h to remove template, then obtaining MCM-48 mesoporous molecular sieve.

(2) Slurry was applied to a glass plate, followed by vacuum drying at 100°C for 24h, then a MCM-48 mesoporous molecular sieve modified polyacrylonitrile-methyl methacrylate gel film was obtained.

Specifically, in this embodiment, thickness of the polyacrylonitrile-methyl methacrylate gel film was 30$\mu$m.

(3) in a glove box filled with argon gas, the MCM-48 mesoporous molecular sieve modified polyacrylonitrile-methyl methacrylate gel film was immersed in electrolyte for 60 min, then a MCM-48 mesoporous molecular sieve modified polyacrylonitrile-methyl methacrylate gel electrolyte was obtained.

Specifically, in this embodiment, electrolyte consists of $LiPF_6$, EC and DMC; mass ratio of EC to DMC was 1:2, and molar concentration of the $LiPF_6$ was 0.8 mol/L. Electrolyte was contained in a glove box filled with argon gas.

Conductivity of the MCM-48 mesoporous molecular sieve modified polyacrylonitrile-methyl methacrylate gel electrolyte of the present invention was 5.1ms/cm.

The prepared polyacrylonitrile-methyl methacrylate gel electrolyte was use to assemble into lithium-ion battery (in a corresponding manner as described in Example 1). In a pressure range of 2.5-4.2V, the lithium-ion battery assembled according to this embodiment was tested at 0.1C on a charge-discharge tester. The third discharge specific capacity was 98 mAh/g, and discharge efficiency was 92%.

While the present invention has been described with reference to particular embodiments, it will be understood that the embodiments are illustrative and that the invention scope is not so limited. Alternative embodiments of the present invention will become apparent to those having ordinary skill in the art to which the present invention pertains. Such alternate embodiments are considered to be encompassed within the spirit and scope of the present invention. Accordingly, the scope of the present invention is described by the appended claims and is supported by the foregoing description.

**Claims**

1. A method for preparing polyacrylonitrile-methyl methacrylate gel electrolyte film, comprising:

    (1) dissolving polyacrylonitrile-methyl methacrylate in organic solvent in an amount ranging from 1 to 3 times the weight of polyacrylonitrile-methyl methacrylate, followed by adding MCM-48 mesoporous molecular sieves; elevating temperature to 30°C-50°C while stirring thoroughly, then obtaining a slurry containing MCM-48 mesoporous molecular sieve; wherein mass ratio of MCM-48 mesoporous molecular sieve to polyacrylonitrile-methyl methacrylate is in a range of 0.05-0.3:1;
    (2) applying the slurry to a substrate, followed by vacuum drying at 60°C-100°C for a period of 24h-48h; then obtaining a MCM-48 mesoporous molecular sieve modified polyacrylonitrile-methyl methacrylate gel electrolyte film.

2. The method for preparing polyacrylonitrile-methyl methacrylate gel electrolyte film according to claim 1, wherein a mass-average molecular mass of the polyacrylonitrile-methyl methacrylate is in a range of 100,000-500,000.

3. The method for preparing polyacrylonitrile-methyl methacrylate gel electrolyte film according to claim 1, wherein the organic solvent in step (1) is N-methylpyrrolidone, N,N-dimethylformamide, acetonitrile or ethanol.

4. The method for preparing polyacrylonitrile-methyl methacrylate gel electrolyte film according to claim 1, wherein MCM-48 mesoporous molecular sieve is prepared by the following steps:

dissolving cetyl trimethyl ammonium bromide in deionized water, followed by adding sodium hydroxide; elevating temperature to 20°C-50°C, then stirring thoroughly at a constant temperature to dissolve sodium hydroxide; adding tetraethyl orthosilicate while stirring for a period of 4-5h, then obtaining liquid reactant;

transferring the liquid reactant to a polytetrafluoroethylene-lined reactor, then standing and crystallizing in a drying oven at 100°C; filtrating and washing with water, then drying at 70°C-90°C for a period of 12-48h to obtain MCM-48 precursor;

placing the MCM-48 precursor in a muffle furnace, followed by roasting at 500°C-600°C for a period of 4-10h to remove template, then obtaining MCM-48 mesoporous molecular sieve; wherein mass ratio of deionized water to sodium hydroxide to tetraethyl orthosilicate is in a range of 60-80:0.3-0.6:1, and mass ratio of cetyl trimethyl ammonium bromide to deionized water in a range of 0.8%-1.2%.

5. The method for preparing polyacrylonitrile-methyl methacrylate gel electrolyte film according to claim 1, wherein a thickness of the polyacrylonitrile-methyl methacrylate gel electrolyte film in step (2) is in a range of 30$\mu$m-50$\mu$m.

6. A method for preparing polyacrylonitrile-methyl methacrylate gel electrolyte, comprising:

(1) dissolving polyacrylonitrile-methyl methacrylate in organic solvent in an amount ranging from 1 to 3 times the weight of polyacrylonitrile-methyl methacrylate, followed by adding MCM-48 mesoporous molecular sieves; elevating temperature to 30°C-50°C while stirring thoroughly, then obtaining a slurry containing MCM-48 mesoporous molecular sieve; wherein mass ratio of MCM-48 mesoporous molecular sieve to polyacrylonitrile-methyl methacrylate is in a range of 0.05-0.3:1;

(2) applying the slurry to a substrate, followed by vacuum drying at 60°C-100°C for a period of 24h-48h; then obtaining a MCM-48 mesoporous molecular sieve modified polyacrylonitrile-methyl methacrylate gel electrolyte film;

(3) in a glove box filled with inert gas, immersing the polyacrylonitrile-methyl methacrylate gel electrolyte film in electrolyte for a period of 5min-60min, then obtaining a MCM-48 mesoporous molecular sieve modified polyacrylonitrile-methyl methacrylate gel electrolyte.

7. The method for preparing polyacrylonitrile-methyl methacrylate gel electrolyte according to claim 1, wherein the electrolyte in step (3) consists of LiPF$_6$, EC and DMC; mass ratio of EC to DMC is in a range of 1:3-2:1, and molar concentration of the LiPF$_6$ is in a range of 0.5mol/L-1.5mol/L.

8. The method for preparing polyacrylonitrile-methyl methacrylate gel electrolyte according to claim 1, wherein the organic solvent in step (1) is N-methylpyrrolidone, N,N-dimethylformamide, acetonitrile or ethanol.

9. The method for preparing polyacrylonitrile-methyl methacrylate gel electrolyte according to claim 1, wherein MCM-48 mesoporous molecular sieve is prepared by the following steps:

dissolving cetyl trimethyl ammonium bromide in deionized water, followed by adding sodium hydroxide; elevating temperature to 20°C-50°C, then stirring thoroughly at a constant temperature to dissolve sodium hydroxide; adding tetraethyl orthosilicate while stirring for a period of 4-5h, then obtaining liquid reactant;

transferring the liquid reactant to a polytetrafluoroethylene-lined reactor, then standing and crystallizing in a drying oven at 100°C; filtrating and washing with water, then drying at 70°C-90°C for a period of 12-48h to obtain MCM-48 precursor;

placing the MCM-48 precursor in a muffle furnace, followed by roasting at 500°C-600°C for a period of 4-10h to remove template, then obtaining MCM-48 mesoporous molecular sieve; wherein mass ratio of deionized water to sodium hydroxide to tetraethyl orthosilicate is in a range of 60-80:0.3-0.6:1, and mass ratio of cetyl trimethyl ammonium bromide to deionized water is in a range of 0.8%-1.2%.

10. A polyacrylonitrile-methyl methacrylate gel electrolyte prepared by the method as claimed in any one of the claims from 6 to 9.

# INTERNATIONAL SEARCH REPORT

International application No.

**PCT/CN2012/077845**

### A. CLASSIFICATION OF SUBJECT MATTER

See the extra sheet

According to International Patent Classification (IPC) or to both national classification and IPC

### B. FIELDS SEARCHED

Minimum documentation searched (classification system followed by classification symbols)

IPC: C08J /5-; C08L 33/-; H01M 10/-

Documentation searched other than minimum documentation to the extent that such documents are included in the fields searched

Electronic data base consulted during the international search (name of data base and, where practicable, search terms used)

WPI, CNKI: electrolyte, molecular sieve, doping, conductivity, acrylonitrile, acrylic acid, silicon

WPI, EPODOC: MOLECULAR SIEVE? MESOPOROUS, ELECTROLYTE, PAN, POLYARCYLONITRILE

### C. DOCUMENTS CONSIDERED TO BE RELEVANT

| Category* | Citation of document, with indication, where appropriate, of the relevant passages | Relevant to claim No. |
|---|---|---|
| Y | CN 102005609 A (ZHEJIANG UNIVERSITY OF TECHNOLOGY), 06 April 2011 (06.04.2011), see description, paragraphs [0008] and [0028]-[0029] | 1-10 |
| Y | CN 102244293 A (CENTRAL SOUTH UNIVERSITY), 16 November 2011 (16.11.2011), see description, paragraphs [0005]-[0020] and [0024] | 1-10 |
| Y | CN 101774605 A (CHINA TOBACCO CHUANYU INDUSTRIAL CO., LTD.), 14 July 2010 (14.07.2010), see claim 1 | 4, 9 |
| A | CN 101127408 A (GUANGZHOU TINCI MATERIALS TECHNOLOGY CO., LTD.), 20 February 2008 (20.02.2008), the whole document | 1-10 |
| A | CN 102306832 A (SHANGHAI JIAOTONG UNIVERSITY), 04 January 2012 (04.01.2012), the whole document | 1-10 |

☐ Further documents are listed in the continuation of Box C.     ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 27 March 2013 (27.03.2013) | **11 April 2013 (11.04.2013)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **HE, Fang** Telephone No.: (86-10) **62084472** |
|---|---|

Form PCT/ISA/210 (second sheet) (July 2009)

**INTERNATIONAL SEARCH REPORT**
Information on patent family members

International application No.

**PCT/CN2012/077845**

| Patent Documents referred in the Report | Publication Date | Patent Family | Publication Date |
|---|---|---|---|
| CN 102005609 A | 06.04.2011 | None | |
| CN 102244293 A | 16.11.2011 | None | |
| CN 101774605 A | 14.07.2010 | CN 101774605 B | 07.09.2011 |
| CN 101127408 A | 20.02.2008 | CN 100524936 C | 05.08.2009 |
| CN 102306832 A | 04.01.2012 | None | |

Form PCT/ISA/210 (patent family annex) (July 2009)

## INTERNATIONAL SEARCH REPORT

International application No.

**PCT/CN2012/077845**

**CLASSIFICATION OF SUBJECT MATTER**

C08J 5/22 (2006.01) i

H01M 10/40 (2006.01) i

C08L 33/12 (2006.01) i

C08L 33/20 (2006.01) i

Form PCT/ISA/210 (extra sheet) (July 2009)